# EUROPÄISCHE PATENTSCHRIFT

(11) **EP 0 725 115 B1**
(45) Veröffentlichungstag und Bekanntmachung des Hinweises auf die Patenterteilung: **18.03.1998**
(21) Anmeldenummer: 96100727.5
(22) Anmeldetag: 19.01.1996
(51) Int. Cl.: C09C 3/12, C09C 1/36, C03C 25/02

(54) **Verwendung von organofunktionellen Polysiloxanen zum Modifizieren der Oberfläche feinteiliger Partikel**
Use of organofunctional polysiloxanes to modify the surface of fine particles
Utilisation de polysiloxanes organofonctionnels pour modifier les surfaces de fines particules

(30) Priorität: 01.02.1995 DE 19503102
(43) Veröffentlichungstag der Anmeldung: 07.08.1996
(73) Patentinhaber: Th. Goldschmidt AG, 45127 Essen (DE)
(72) Erfinder: Höhner, Werner, D-42555 Velbert (DE); Schaefer, Dietmar, Dr., D-45529 Hattingen (DE)

(56) Entgegenhaltungen:
- EP-A- 0 468 305
- DE-A- 4 140 793
- DE-C- 3 820 294
- DE-C- 4 140 794
- PATENT ABSTRACTS OF JAPAN vol. 18, no. 337 (C-1217), 27.Juni 1994 & JP-A-06 080406 (MITSUBISHI MATERIALS), 22.März 1994,
- PATENT ABSTRACTS OF JAPAN vol. 94, no. 11 & JP-A-06 313114 (MITSUBISHI GAS CHEM. CO.), 8.November 1994,

## Beschreibung

Die Erfindung betrifft die Verwendung von Organopolysiloxanen mit über Kohlenstoffatomen an Siliciumatome gebundenen Ester- und/oder Epoxidgruppen zum Modifizieren der Oberfläche feinteiliger Partikel, wie Pigmente und Füllstoffe, oder von Glasfasern.

Es ist bekannt, die Eigenschaften von Pigmenten und Füllstoffen durch Aufbringen von siliciumorganischen Verbindungen auf deren Oberflächen zu verbessern. Durch eine solche Beschichtung sollen die Einarbeitung und Dispergierung der Pigmente oder Füllstoffe in Lacke, Dispersionsfarben, Kunststoffe, Toner, Baustoffe, Emails oder dgl. erleichtert werden. Durch eine solche Beschichtung mit siliciumorganischen Verbindungen soll außerdem die Agglomeration von Pigmenten und Füllstoffen bei der Lagerung und Verarbeitung vermieden werden. Es ist außerdem erwünscht, den Staubanfall bei der Lagerung von Pigmenten und Füllstoffen zu reduzieren.

Dieser Stand der Technik ist in der EP-A-0 373 426 zusammenfassend dargestellt worden. Gegenstand der EP-A-0 373 426 sind anorganische Farb- und Magnetpigmente mit einem Gehalt von mindestens 0,1 Gew.-% und höchstens 5 Gew.-% an einem oder mehreren Polyorganosiloxanen, die eine Viskosität von 100 bis 100 000 mPa·s und eine relative Molmasse von 500 bis 500 000 aufweisen, keine reaktiven oder vernetzend wirkenden Gruppen enthalten, pro Molekül mindestens eine Si-Alkyl- und/oder Si-Arylgruppe mit 9 bis 25 C-Atomen enthalten, wobei diese Gruppen zu 7 bis 70 Gew.-% im Polyorganosiloxan vorhanden sind, und die übrigen Organoreste im Polyorganosiloxan 1 bis 8 C-Atome aufweisen.

Die in der vorgenannten EP-A-0 373 426 benannten Organosiliciumverbindungen sind zwar zur Beschichtung von Farbpigmenten in vielen Fällen geeignet, jedoch versagen sie häufig bei Füllstoffen, wie z. B. Magnesium- oder Aluminiumoxiden oder deren Oxidhydraten. Häufig ist auch eine bessere Dispergierbarkeit der beschichteten Teilchen und ein besseres Anhaften der Beschichtung an den Oberflächen der Teilchen erwünscht.

In der britischen Patentanmeldung GB 2 244 489 wird ein Füllstoff beansprucht, der mit einer Schicht vernetzter Siliconelastomeren versehen ist, die chemisch mit der Oberfläche des anorganischen Kerns verbunden sind. Aus den dort genannten Beispielen geht hervor, daß zunächst hochverzweigte Siliconelastomere mit einer Vielzahl an reaktiven Si-OH-Gruppen (auch als "rubbery reactive silicone" bezeichnet) hergestellt werden, die nach Auftrag auf den anorganischen Füllstoff auf diesem bei 250 °C 4 Stunden lang ausgehärtet werden müssen. Das Siliconelastomer ist das Produkt einer Vernetzungsreaktion zwischen einem "multifunktionell terminierten" Polysiloxan und einem Silanvernetzer. Diese Beschichtungsmaterialien sind vernetzte Elastomere, die die mechanischen Eigenschaften, wie Dehnbarkeit und Zähigkeit, von gefüllten Polymeren verbessern sollen.

In der EP-A-0 321 322 werden magnetisierbare Teilchen beschrieben, die sich in einer Matrix aus einem vernetzten Organopolysiloxan befinden und einen Teilchendurchmesser im Bereich zwischen 0,05 und 3 µm haben können. Die Polysiloxanmatrix wird durch Hydrosilylierung von Vinylsiloxanen mit Wasserstoffsiloxanen in Gegenwart der magnetisierbaren Teilchen hergestellt. Das Vinyl- oder Wasserstoffsiloxan kann gegebenenfalls weitere reaktive oder auch nichtreaktive, gegebenenfalls auch ionogene Gruppen enthalten, die an ein Siliciumatom über eine Si-C-Bindung geknüpft sind. Mit den dort beschriebenen magnetisierbaren Verbundteilchen soll eine gute Dispergierbarkeit in wäßrigen Systemen erreicht werden. Anwendung finden die beschichteten magnetisierbaren Teilchen in der Medizin, Biologie und Diagnostik.

In den deutschen Patentschriften DE-B-41 40 793 und DE-B-41 40 794 werden Organopolysiloxane beschrieben, die über Kohlenstoffatome an Silicium gebundene Epoxi- oder Estergruppen in Kombination mit langkettigen Alkylgruppen aufweisen.

Diese sind universell zur Beschichtung von feinteiligen Partikeln, wie Pigmente und Füllstoffe, geeignet, um deren Dispergierbarkeit und Verträglichkeit in organischen Medien, wie Lakke und Kunststoffe, zu verbessern.

Bei hohen Verarbeitungstemperaturen, wie sie z. B. zur Einarbeitung von Pigmenten und Füllstoffen in Thermoplaste oder zum Einbrennen von Lacken üblich sind, zeigen diese Beschichtungsmittel jedoch unzureichende Temperaturstabilität, was insbesondere bei hohen Füllstoff/Pigmentanteilen zur Vergilbung führen kann.

Die vorliegende Erfindung befaßt sich mit dem technischen Problem, Beschichtungsmittel für feinteilige Partikel zu finden, die einerseits gutes Dispergieren der beschichteten Partikel in organischen Medien bewirkt, ohne bei höherer Verarbeitungs- oder Behandlungstemperatur eine Vergilbung des Endproduktes zu bewirken.

Überraschend wurde gefunden, daß im wesentlichen durch einen Ersatz der langkettigen Alkylgruppen gemäß DE-B-41 40 793 und DE-B-41 40 794 durch Alkarylgruppen diese Nebeneffekte nicht auftreten.

Gegenstand der Erfindung ist deshalb die Verwendung von Organopolysiloxanen mit über Kohlenstoffatome an Siliciumatome gebundenen Ester- und/oder Epoxidgruppen der allgemeinen Formel 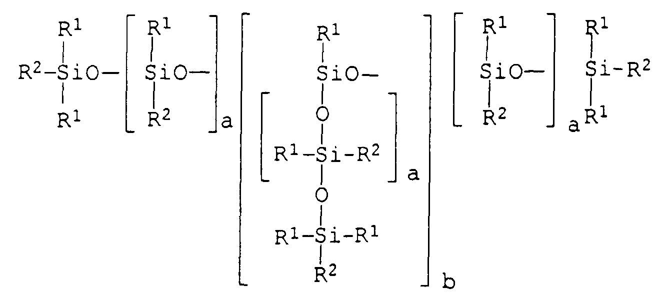
- R¹ =: Alkylrest mit 1 bis 18 Kohlenstoffatomen, wobei jedoch mindestens 90 % der R¹-Reste CH₃-Reste sind,
- R² =: 50 bis 99 % haben die Bedeutung der Reste R¹,
1 bis 50 % haben die Bedeutung der Reste R³ und R⁴,
- R³ =: Rest der Formel

-(CH₂)ₙ-CO-OR⁵

und/oder 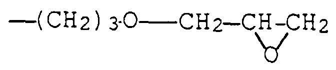 und/oder 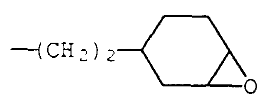
- R⁵ =: Alkylrest mit 1 bis 4 Kohlenstoffatomen,
- n =: 3 bis 20,
- R⁴ =: Rest der Formel 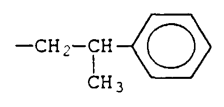 wobei das Verhältnis der Reste R³ : R⁴ = 1 : 25 bis 10 : 1 beträgt, jedoch im durchschnittlichen Molekül mindestens ein Rest R³ und mindestens ein Rest R⁴ vorhanden sein müssen,
- a =: 1 bis 500,
- b =: 0 bis 10,
zum Modifizieren der Oberfläche feinteiliger Partikel, wie Pigmente und Füllstoffe, oder von Glasfasern.

R¹ ist ein Alkylrest mit 1 bis 4 Kohlenstoffatomen oder ein Phenylrest. Mindestens 90 % der Reste R¹ sollen Methylreste sein. Besonders bevorzugt ist, daß alle Reste R¹ Methylreste sind. Jedoch kann in vielen Fällen die Verträglichkeit mit Lakken durch die Einführung von Phenylresten verbessert werden.

50 bis 99 % der Gruppen R² können die Bedeutung des Restes R¹ haben. Die restlichen Gruppen R² kennzeichnen die organofunktionellen Gruppen, die aus zwei unterschiedlichen Typen gebildet sind:

Der eine organofunktionelle Rest R³ kann ein Esterrest der Formel -(CH₂)ₙ-CO-OR⁵ sein, wobei n eine Zahl mit einem Wert von 3 bis 20 und R⁵ ein Alkylrest mit 1 bis 4 Kohlenstoffatomen ist. Vorzugsweise hat n einen Wert von 6 bis 16, insbesondere 8 bis 12. R⁵ ist vorzugsweise ein Methyl- oder Ethylrest. Besonders bevorzugt ist der Rest -(CH₂)₁₀CO-OCH₃, der gute Produkteigenschaften mit leichter Verfügbarkeit verbindet. Dieser Rest R³ zeigt die gewünschte abgestufte Reaktivität.

Alternativ ist der Rest R³ ein Epoxyrest der Formel 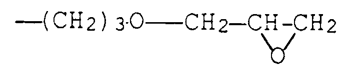 und/oder der Formel 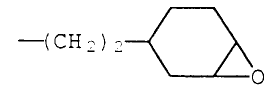 Auch dieser Epoxyrest gibt dem erfindungsgemäß zu verwendenden Organopolysiloxan die gewünschte Substantivität und abgestufte Reaktivität.

Im Molekül des erfindungsgemäß zu verwendenden Organopolysiloxans sind 1 bis 50 % der Reste R² die Reste R³ und R⁴. Das Verhältnis der Reste R³ zu R⁴ soll 1 : 25 bis 10 : 1 betragen. Dabei muß aber die Bedingung erfüllt sein, daß im durchschnittlichen Organopolysiloxanmolekül mindestens jeweils 1 Rest R³ und mindestens 1 Rest R⁴ vorhanden sein muß.

Die Reste R³ bzw. R⁴ können end- und/oder seitenständig gebunden sein. Organopolysiloxane mit seitenständig gebundenen Resten R³ und R⁴ sind bevorzugt.

Die Struktur des Organopolysiloxans wird durch den Wert der Indices a und b bestimmt. a kennzeichnet den Gehalt an difunktionellen Siloxyeinheiten, während b den Grad der Verzweigung angibt. a hat einen Wert von 1 bis 500, vorzugsweise 2 bis 100. b hat einen Wert von 0 bis 10 und ist vorzugsweise 0 bis 5.

Die Verbindungen können in an sich bekannter Weise durch Anlagerung von α-Methylstyrol und ungesättigten Estern der Formel CH₂=CH-(CH₂)ₙ₋₂CO-OR⁵ bzw. Allylglycidylethern oder Vinylcyclohexenoxid an Organopolysiloxane, bei denen der entsprechende Anteil an Resten R² durch Rest -H ersetzt ist, in Gegenwart geeigneter Katalysatoren, wie Platinverbindungen, z. B. H₂PtCl₆, oder in Gegenwart von auf Trägermaterialien aufgebrachtem Platin hergestellt werden.

In den folgenden Beispielen werden die anwendungstechnischen Eigenschaften der erfindungsgemäß verwendeten Verbindungen noch näher erläutert.

### Anwendungstechnische Beispiele

Bei der Einarbeitung von Pigmenten und Füllstoffen in Kunststoffe werden aus verschiedenen Gründen (Kapazität, Viskosität) hohe Verarbeitungstemperaturen vorgelegt.

Zur Überprüfung der Wirksamkeit der erfindungsgemäß zu verwendenden Modifizierungsmittel wurde beispielhaft Titandioxid eine Stunde in einer Schüttelmühle (Scandex Typ BAS 20) mit 15-mm-Kugeln und 0,2 bis 1 Gew.-% Zusatz der zu prüfenden Organopolysiloxane behandelt und danach einer Temperaturbelastung von 250 °C 30 Minuten lang ausgesetzt.

Nach Abkühlung wurden die so vorbehandelten Pigmente in eine Lösung, bestehend aus 80 Gew.-Teilen 2-Ethoxyethylacetat und 20 Gew.-Teilen Plexigum PM 391 im Verhältnis 40 Gew.-% Lösung und 60 Gew.- Pigment, dispergiert.

Diese Dispersion wurde auf gereinigte Bleche mit einem 200-µ-Rakel aufgetragen und unter milden Bedingungen getrocknet. Der getrocknete Film wurde visuell und über Vergilbungsmessung beurteilt.

Als Beschichtungsmittel wird das folgende, erfindungsgemäß zu verwendende, modifizierte Organopolysiloxan eingesetzt:

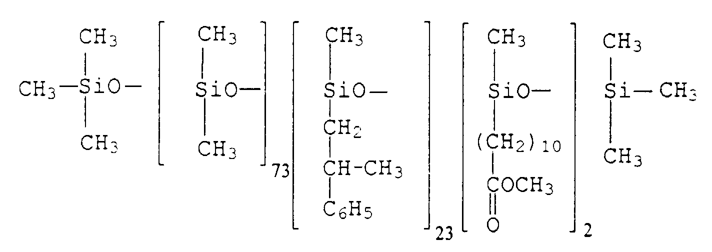

Für die Vergleichsversuche wird als Beschichtungsmittel das dem Stand der Technik entsprechende Organopolysiloxan mit der folgenden Formel eingesetzt:

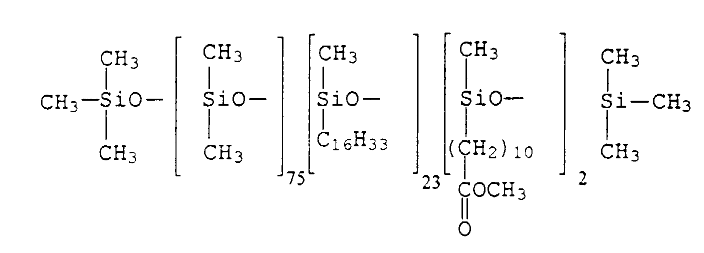

Bei der Einarbeitung von Pigmenten und Füllstoffen in Kunstoffe werden aus verschiedenen Gründen (Kapazität, Viskosität) hohe Verarbeitungstemperaturen vorgelegt.

Zur Überprüfung der Wirksamkeit der erfindungsgemäß zu verwendenden Modifizierungsmittel wurde beispielhaft Titandioxid eine Stunde in einer Schüttelmühle (Scandex Typ BAS 20) mit 15-mm-Kugeln und 0,2 bis 1 Gew.-% Zusatz der zu prüfenden Organopolysiloxane behandelt und danach einer Temperaturbelastung von 250 °C 30 Minuten lang ausgesetzt.

Nach Abkühlung wurden die so vorbehandelten Pigmente in eine Lösung, bestehend aus 80 Gew.-Teilen 2-Ethoxyethylacetat und 20 Gew.-Teilen Plexigum PM 391 im Verhältnis 40 Gew.-% Lösung und 60 Gew.-% Pigment, dispergiert.

Diese Dispersion wurde auf gereinigte Bleche mit einem 200-µ-Rakel aufgetragen und unter milden Bedingungen getrocknet. Der getrocknete Film wurde visuell und über Vergilbungsmessung beurteilt.

Die Vergilbungsmessung wurde mit dem Byk Colour Gloss durchgeführt. Folgende Werte wurden ermittelt:

| | |
|---|---|
| 1 Gew.-% Zusatz erfindungsgemäß | L* = 94,02 |
| | a* = 0,08 |
| | b* = 0,10 |
| 1 Gew.-% Zusatz Vergleich | L* = 88,66 |
| | a* = -0,25 |
| | b* = 4,10 |

Die Vergleichszahlen wurden aus dem Mittel dreier Meßwerte ermittelt.

Die Werte sind so zu interpretieren, daß L* Vergilbung, a*-grün und a*+ rot sowie b*+ gelb bedeuten. Somit ist klar ersichtlich, daß das erfindungsgemäße Produkt, insbesondere in den Bereichen Vergilbung und Gelbstich dem Vergleich deutlich überlegen ist.

Auch die visuelle Beurteilung bestätigt unter allen üblichen Lichtverhältnissen das gemessene Ergebnis.

## Patentansprüche

1. Verwendung von Organopolysiloxanen mit über Kohlenstoffatome an Siliciumatome gebundenen Ester- und/oder Epoxidgruppen der allgemeinen Formel 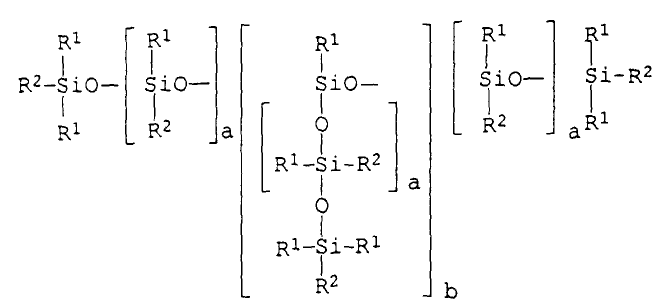
R¹ = Alkylrest mit 1 bis 18 Kohlenstoffatomen, wobei jedoch mindestens 90 % der R¹-Reste CH₃-Reste sind,
R² = 50 bis 99 % haben die Bedeutung der Reste R¹,
1 bis 50 % haben die Bedeutung der Reste R³ und R⁴,
R³ = Rest der Formel
-(CH₂)ₙ-CO-OR⁵
und/oder 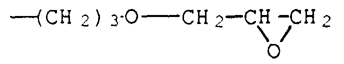 und/oder 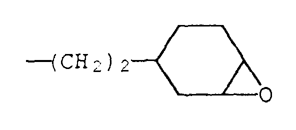
R⁵ = Alkylrest mit 1 bis 4 Kohlenstoffatomen,
n = 3 bis 20,
R⁴ = Rest der Formel 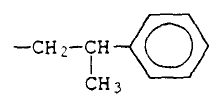 wobei das Verhältnis der Reste R³ : R⁴ = 1 : 25 bis 10 : 1 beträgt, jedoch im durchschnittlichen Molekül mindestens ein Rest R³ und mindestens ein Rest R⁴ vorhanden sein müssen,
a = 1 bis 500,
b = 0 bis 10,
zum Modifizieren der Oberfläche feinteiliger Partikel, wie Pigmente und Füllstoffe, oder von Glasfasern.

## Claims

1. Use of organopolysiloxanes having ester and/or epoxide groups attached to silicon atoms via carbon atoms, of the general formula 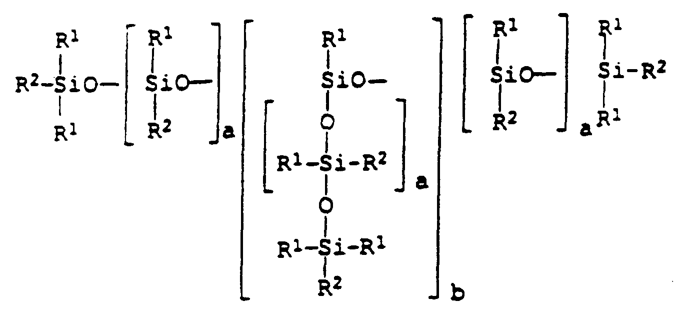
R¹ = alkyl radical having 1 to 18 carbon atoms, where at least 90% of the radicals R¹ are CH₃ radicals,
R² = from 50 to 99% have the meaning of the radicals R¹,
from 1 to 50% have the meaning of the radicals R³ and R⁴,
R³ = radical of the formula
-(CH₂)ₙ-CO-OR⁵
and/or 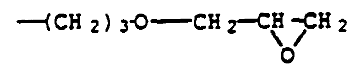 and/or 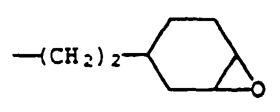
R⁵ = alkyl radical having 1 to 4 carbon atoms,
n = 3 to 20,
R⁴ = radical of the formula 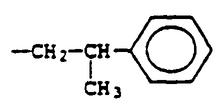 where the ratio of the radicals R³ to R⁴ is from 1:25 to 10:1 but in the average molecule there must be at least one radical R³ and at least one radical R⁴,
a = 1 to 500,
b = 0 to 10,
for modifying the surface of fine particles, such as pigments and fillers, or of glass fibres.

## Revendications

1. Utilisation d'organopolysiloxanes avec des groupes ester et/ou époxyde liés à des atomes de silicium par des atomes de carbone, de formule générale : 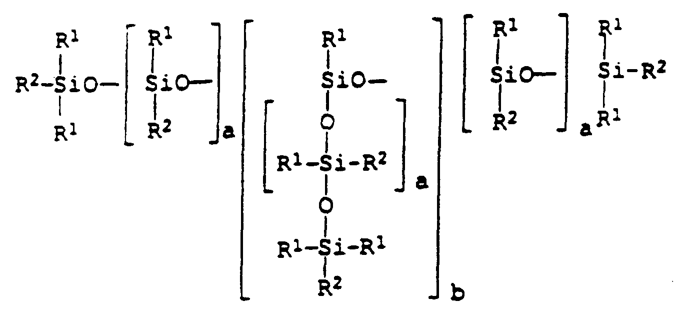
R¹ = radical alcoyle avec 1 à 18 atomes de carbone, où toutefois, au moins 90% des radicaux R¹ sont des radicaux CH₃;
R² = 50 à 99% ont la signification des radicaux R¹,
1 à 50% ont la signification des radicaux R³ et R⁴;
R³ = radical de formule :
-(CH₂)ₙ-CO-OR⁵
et/ou 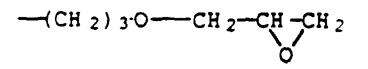 et/ou 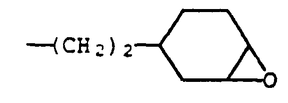
R⁵ = radical alcoyle avec 1 à 4 atomes de carbone;
n = 3 à 20, et
R⁴ = radical de formule : 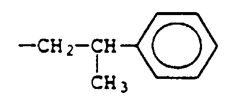 où le rapport des radicaux R³:R⁴ s'élève de 1:25 à 10:1, cependant dans la molécule moyenne, au moins un radical R³ et au moins un radical R⁴ doivent être présents;
a = 1 à 500, et
b = 0 à 10,
pour modifier la surface de fines particules, comme les pigments et les charges, ou de fibres de verre.
